# EUROPEAN PATENT APPLICATION

(11) **EP 4 730 125 A1**
(43) Date of publication of application: **22.04.2026**
(21) Application number: 24822452.9
(22) Date of filing: 13.05.2024
(51) Int. Cl.: G06F 9/46

(54) **MULTI-THREAD CONCURRENT MANAGEMENT METHOD AND RELATED APPARATUS**

(30) Priority: 15.06.2023 CN 202310717179
(71) Applicant: Huawei Technologies Co., Ltd., Shenzhen, Guangdong 518129 (CN)
(72) Inventor: LI, Xiuchang, Shenzhen, Guangdong 518129 (CN)
(74) Representative: Pfenning, Meinig & Partner mbB
(86) International application number: PCT/CN2024/092938
(87) International publication number: WO 2024/255500

(57) **Abstract**

This application discloses a multi-thread concurrency management method and a related apparatus. The method may include: dividing a target global variable into multiple variable sub-areas, where the target global variable is used to control multiple threads to access target data, and each variable sub-area in the multiple variable sub-areas includes one or more flag bits; grouping the multiple threads into multiple thread groups, where the multiple threads are used to apply for a permission to read the target data; authorizing a target thread in a target thread group to modify a flag bit in a target variable sub-area, where one thread group in the multiple thread groups one-to-one corresponds to one variable sub-area in the multiple variable sub-areas; and if the target thread successfully modifies the flag bit, allowing the target thread to read the target data. Embodiments of this application are used in a scenario in which the multiple threads concurrently perform CAS operations, to improve a success rate of the CAS operations.

## Description

This application claims priority to Chinese Patent Application No. 202310717179.1, filed with the China National Intellectual Property Administration on June 15, 2023 and entitled "MULTI-THREAD CONCURRENCY MANAGEMENT METHOD AND RELATED APPARATUS", which is incorporated herein by reference in its entirety.

### TECHNICAL FIELD

This application relates to the field of computer technologies, and in particular, to a multi-thread concurrency management method and a related apparatus.

### BACKGROUND

A thread (thread) is a control flow in a single sequence in a process and is used as a minimum unit for program execution. In an operating system in which the thread is introduced, the thread is used as a basic unit for independent running and independent scheduling. Threads may be executed concurrently, including concurrency of multiple threads in one process, concurrency of threads in different processes, and concurrency of threads of different cores in a multi-core computer system.

When being executed concurrently, the multiple threads may need to access same shared data. That is, the shared data may be shared between different threads. To ensure integrity of the shared data, an atomic operation, for example, a compare and swap (compare and swap, CAS) operation, needs to be performed when the multiple threads simultaneously access the shared data. In this way, the multiple concurrent threads cannot simultaneously modify the shared data, one thread cannot read shared data that is being modified by another thread, and the multiple threads can simultaneously read the shared data. A common application scenario of the CAS operation is a read/write lock or another function (for example, pinbuffer/unpinbuffer) that implements a similar read/write function. The read/write lock has two states: a read lock and a write lock. When one thread holds a write lock, the thread can read and write shared data, and another thread cannot hold the write lock or a read lock. When one thread holds a read lock, the thread can read shared data, and another thread can also hold the read lock. Generally, one variable is used to control a status of the read/write lock. CAS operations can be performed between the multiple threads to ensure consistency.

However, as a quantity of computer cores continuously increases and a single-core computing capability continuously increases, a quantity of concurrent threads and a concurrency speed of the threads further increase. In a high concurrency scenario, a failure rate of concurrently performing CAS operations by multiple threads is high, and the phenomenon of CAS operation retries is severe. Overheads for the CAS operations increase exponentially. This becomes one of bottlenecks that restrict computer performance.

Therefore, how to provide a method that can improve a success rate of concurrently performing the CAS operations by the multiple threads is an urgent problem to be resolved.

### SUMMARY

Embodiments of this application provide a multi-thread concurrency management method and a related apparatus, used in a scenario in which multiple threads concurrently perform CAS operations, to improve a success rate of the CAS operations.

According to a first aspect, an embodiment of this application provides a multi-thread concurrency management method. The method may include: dividing a target global variable into multiple variable sub-areas, where the target global variable is used to control multiple threads to access target data, and each variable sub-area in the multiple variable sub-areas includes one or more flag bits; grouping the multiple threads into multiple thread groups, where the multiple threads are used to apply for a permission to read the target data; authorizing a target thread in a target thread group to modify a flag bit in a target variable sub-area, where the target thread group is one thread group in the multiple thread groups, the target variable sub-area is one variable sub-area in the multiple variable sub-areas, and one thread group in the multiple thread groups one-to-one corresponds to one variable sub-area in the multiple variable sub-areas; and if the target thread successfully modifies the flag bit, allowing the target thread to read the target data.

In a conventional technology, when the multiple threads apply for reading the shared data and concurrently modify the global variable used to control the multiple threads to access the shared data, only one thread can successfully modify a value of the global variable at one time. As a result, a large quantity of modification operations are retried due to failures, a modification success rate is low, instruction overheads for the modification operations are high, and a waste of resources is serious. In this embodiment of this application, the global variable used to control the multiple threads to access the shared data is divided into the multiple variable sub-areas, and the multiple threads that apply for reading the shared data are grouped into the multiple thread groups, so that one thread group corresponds to one variable sub-area, and different thread groups correspond to different variable sub-areas. Therefore, when threads in the different thread groups apply for reading the shared data, a permission to read the shared data may be obtained by modifying a value of a corresponding variable sub-area. When the shared data is applied to be read, modification of values of the different variable sub-areas is independent between the threads of the different thread groups, so that a value of each variable sub-area can be successfully modified by one thread. That is, in a round of concurrent modification, multiple threads may perform successful modification. Therefore, when the foregoing method is used in a scenario in which the multiple threads concurrently perform CAS operations, if the multiple threads apply for reading the shared data, and the CAS operations performed concurrently modify the values of the different variable sub-areas, multiple CAS operations may succeed, thereby improving a success rate of the CAS operations and reducing a waste of resources.

In a possible implementation, the method further includes: determining, based on a status of the flag bit in each variable sub-area, a total quantity of threads that can currently read the target data.

In this embodiment of this application, a quantity of threads that can currently read the shared data and that are represented by each variable sub-area is determined based on the status of the flag bit in each variable sub-area, and the total quantity of threads that can currently read the shared data is a sum of quantities of threads that can be determined in all variable sub-areas. When a thread holds a read lock, if another thread applies for locking a write lock, the lock may fail to be locked and the thread sleeps for waiting. When a total quantity of threads that hold the read lock is 0, the thread that has applied for locking the write lock and temporarily sleeps may be woken up.

In a possible implementation, when the target thread group includes multiple threads, one thread in the target thread group is allowed to successfully modify the flag bit in the target variable sub-area in one clock cycle.

In this embodiment of this application, when multiple threads in a same thread group concurrently apply for reading the target data, that is, attempt to concurrently modify the flag bit in the variable sub-area, only one thread is allowed to successfully modify the flag bit, to ensure consistency of modification of the flag bit in the variable sub-area, and avoid confusion.

In a possible implementation, authorizing the target thread in the target thread group to modify the flag bit in the target variable sub-area includes:

if currently no thread exclusively occupies the target data, authorizing the target thread in the target thread group to modify the flag bit in the target variable sub-area by performing a compare and swap CAS operation.

In this embodiment of this application, in a process in which the thread modifies the flag bit in the variable sub-area, the thread may first determine whether the target data is exclusively occupied. If no other thread exclusively occupies the target data, the thread may modify the flag bit by performing the CAS operation, to ensure consistency of modification and avoid confusion.

In a possible implementation, each variable sub-area further includes a control status bit, and the control status bit is used to indicate whether the target data is exclusively occupied; and the method further includes:
when a first thread in the target thread group applies for exclusively occupying the target data, authorizing the first thread to modify the control status bit in each variable sub-area; and
if the first thread successfully modifies the control status bit, allowing the first thread to exclusively occupy the target data.

In this embodiment of this application, each variable sub-area may further have the control status bit, and the control status bit may be used to identify whether the target data is exclusively occupied by the thread. When a thread applies for exclusively occupying the target data, the thread needs to modify the control status bit in each variable sub-area, so that when another thread subsequently applies for reading the target data, it can be determined whether the target data is exclusively occupied only by determining a control status bit in a variable sub-area corresponding to a thread group of the thread. If the thread that applies for exclusively occupying the target data successfully modifies the control status bit, the thread is allowed to exclusively occupy the target data.

In a possible implementation, authorizing the first thread to modify the control status bit in each variable sub-area includes:
if currently no thread exclusively occupies or reads the target data, authorizing the first thread to modify the control status bit in each variable sub-area by performing a CAS operation.

In this embodiment of this application, in a process in which the thread modifies the control status bit in the variable sub-area, the thread may first determine whether the target data is exclusively occupied or read. If no other thread exclusively occupies or reads the target data, the thread may modify the control status bit in each variable sub-area by performing the CAS operation, to ensure consistency of modification and avoid confusion when the multiple threads simultaneously apply for exclusively occupying the target data.

In a possible implementation, the global variable is a lock status variable, the flag bit is a read lock count bit, and modification of the flag bit in the variable sub-area by a thread in the multiple thread groups is used to lock or unlock a read lock.

In this embodiment of this application, a manner of controlling the multiple threads to access the shared data may be a read/write lock. In this case, the global variable may be the lock status variable, and the flag bit may be the read lock count bit. A process in which the multiple threads apply for reading the target data and modify the flag bit is equivalent to an operation of locking/unlocking the read lock. In a lock status variable partition, the threads are grouped. When the multiple threads can concurrently modify a read lock count bit in the partition in multiple paths, multiple threads may perform successfully modification, thereby improving a success rate of locking/unlocking the read lock.

In a possible implementation, the global variable is a lock status variable, the control status bit is a write lock status bit, and modification of the control status bit in the variable sub-area by a thread in the multiple thread groups is used to lock or unlock a write lock.

In this embodiment of this application, a manner of controlling the multiple threads to access the shared data may be a read/write lock. In this case, the global variable may be the lock status variable, and the control status bit may be the write lock status bit. A process in which the multiple threads apply to exclusively occupy the target data and modify the write lock status bit is equivalent to an operation of locking/unlocking the write lock. When a thread applies for exclusively occupying the target data, the thread needs to modify the write lock status bit in each variable sub-area, so that when another thread subsequently applies for reading the target data, it can be determined whether the target data is exclusively occupied only by determining a write lock status bit in a variable sub-area corresponding to a thread group of the thread, that is, whether a thread holds a write lock.

According to a second aspect, an embodiment of this application provides a multi-thread concurrency management apparatus, including: a first processing unit, configured to divide a target global variable into multiple variable sub-areas, where the target global variable is used to control multiple threads to access target data, and each variable sub-area in the multiple variable sub-areas includes one or more flag bits;
a second processing unit, configured to: group the multiple threads into multiple thread groups, where the multiple threads are used to apply for a permission to read the target data, and
authorize a target thread in a target thread group to modify a flag bit in a target variable sub-area, where the target thread group is one thread group in the multiple thread groups, the target variable sub-area is one variable sub-area in the multiple variable sub-areas, and one thread group in the multiple thread groups one-to-one corresponds to one variable sub-area in the multiple variable sub-areas; and
a third processing unit, configured to: if the target thread successfully modifies the flag bit, allow the target thread to read the target data.

In a possible implementation, the apparatus further includes:
a determining unit, configured to determine, based on a status of the flag bit in each variable sub-area, a total quantity of threads that can currently read the target data.

In a possible implementation, when the target thread group includes multiple threads, one thread in the target thread group is allowed to successfully modify the flag bit in the target variable sub-area in one clock cycle.

In a possible implementation, the second processing unit is specifically configured to:
if currently no thread exclusively occupies the target data, authorizing the target thread in the target thread group to modify the flag bit in the target variable sub-area by performing a compare and swap CAS operation.

In a possible implementation, each variable sub-area further includes a control status bit, and the control status bit is used to indicate whether the target data is exclusively occupied; and the second processing unit is further configured to: when a first thread in the target thread group applies for exclusively occupying the target data, authorize the first thread to modify the control status bit in each variable sub-area; and
the third processing unit is further configured to: if the first thread successfully modifies the control status bit, allow the first thread to exclusively occupy the target data.

In a possible implementation, the second processing unit is specifically configured to:
if currently no thread exclusively occupies or reads the target data, authorize the first thread to modify the control status bit in each variable sub-area by performing a CAS operation.

In a possible implementation, the global variable is a lock status variable, the flag bit is a read lock count bit, and modification of the flag bit in the variable sub-area by a thread in the multiple thread groups is used to lock or unlock a read lock.

In a possible implementation, the global variable is a lock status variable, the control status bit is a write lock status bit, and modification of the control status bit in the variable sub-area by a thread in the multiple thread groups is used to lock or unlock a write lock.

According to a third aspect, an embodiment of this application provides a multi-thread concurrency management apparatus, including a processor. The processor is configured to support the apparatus in implementing a corresponding function in the multi-thread concurrency management method provided in the first aspect. The apparatus may further include a memory. The memory is configured to be coupled to the processor, and the memory stores program instructions and data that are necessary for the apparatus. The apparatus may further include an interface circuit, configured to communicate between the apparatus and another apparatus, another device, or a communication network.

According to a fourth aspect, an embodiment of this application provides a computer-readable storage medium, configured to store computer software instructions used by the device apparatus provided in one or more implementations of the second aspect to implement the multi-thread concurrency management method. The computer-readable storage medium includes a program designed for performing the foregoing aspect.

According to a fifth aspect, an embodiment of this application provides a computer program. The computer program includes instructions, and when the computer program is executed by a computer, the computer is enabled to perform a procedure performed by the apparatus, provided in one or more implementations of the second aspect, configured to implement the multi-thread concurrency management method.

According to a sixth aspect, an embodiment of this application provides an electronic device. The electronic device includes a processor, and the processor is configured to support the electronic device in implementing a corresponding function in the multi-thread concurrency management method provided in the first aspect. The electronic device may further include a memory. The memory is configured to be coupled to the processor, and the memory stores program instructions and data that are necessary for the electronic device. The electronic device may further include a communication interface, configured to implement communication between the electronic device and another device or a communication network.

According to a seventh aspect, an embodiment of this application provides a chip system. The chip system includes a processor, configured to support a device to implement functions in the first aspect, for example, generating or processing information in the multi-thread concurrency management method. In a possible design, the chip system further includes a memory, and the memory is configured to store program instructions and data that are necessary for the device. The chip system may include a chip, or may include a chip and another discrete component.

According to an eighth aspect, an embodiment of this application provides a server, including a communication interface, a memory, and a processor. The communication interface and the memory are coupled to the processor, the communication interface is used by the server to communicate with another device or a communication network, the memory is configured to store computer program code, the computer program code includes computer instructions, and when the processor reads the computer instructions from the memory, the server performs any possible implementation of the first aspect.

According to a ninth aspect, an embodiment of this application provides a vehicle-mounted device, including a communication interface, a memory, and a processor. The communication interface and the memory are coupled to the processor, the communication interface is used by the vehicle-mounted device to communicate with another device or a communication network, the memory is configured to store computer program code, the computer program code includes computer instructions, and when the processor reads the computer instructions from the memory, the vehicle-mounted device performs any possible implementation of the first aspect.

### BRIEF DESCRIPTION OF DRAWINGS

To describe the technical solutions in embodiments of this application or in the background more clearly, the following briefly describes the accompanying drawings for describing embodiments of this application or the background.
FIG. 1 is a diagram of a structure of a lock status variable;
FIG. 2 is a schematic flowchart of locking a read/write lock;
FIG. 3 is a diagram of a result of CAS operations simultaneously performed by multiple threads;
FIG. 4 is a diagram of a system architecture to which a multi-thread concurrency management method according to an embodiment of this application is applied;
FIG. 5 is a schematic flowchart of a multi-thread concurrency management method according to an embodiment of this application;
FIG. 6 is a diagram of a structure of a lock status variable partition according to an embodiment of this application;
FIG. 7 is a diagram of a result of CAS operations simultaneously performed by multiple thread groups according to an embodiment of this application;
FIG. 8 is a performance analysis perf flame diagram according to an embodiment of this application;
FIG. 9 is another performance analysis perf flame diagram according to an embodiment of this application;
FIG. 10 is another performance analysis perf flame diagram according to an embodiment of this application;
FIG. 11 is a diagram of a structure of a multi-thread concurrency management apparatus according to an embodiment of this application; and
FIG. 12 is a diagram of a structure of another multi-thread concurrency management apparatus according to an embodiment of this application.

### DESCRIPTION OF EMBODIMENTS

The following describes embodiments of this application with reference to the accompanying drawings in embodiments of this application.

In the specification, claims, and accompanying drawings of this application, the terms "first", "second", "third", "fourth" and so on are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

An "embodiment" mentioned in this specification means that a particular characteristic, structure, or feature described with reference to embodiments may be included in one or more embodiments of this application. The phrase shown in various locations in the specification may not necessarily refer to a same embodiment, and is not an independent or optional embodiment exclusive from another embodiment. It is explicitly and implicitly understood by persons skilled in the art that embodiments described in the specification may be combined with another embodiment.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

Some terms in this application are first described, to help persons skilled in the art have a better understanding.
(1) An atomic operation is an operation or a series of operations that cannot be interrupted, that is, an operation that is not interrupted by a thread scheduling mechanism. No context switch (context switch) occurs during running. The atomic operation mainly includes a simple increment/decrement operation, a compare and swap (CAS) operation, and a value assignment operation. When multiple threads simultaneously access shared data, the CAS atomic operation is performed to modify a read/write lock or a variable of another function that implements a similar read/write function. This ensures atomicity of modification of the variable value in a multi-thread concurrency scenario to avoid confusion. In embodiments of this application, the variable is divided into multiple areas, and the multiple threads are grouped. When a thread in a target group reads the shared data, a count value of a corresponding target area in the variable may be modified by performing the CAS operation. In other words, the CAS operations of concurrent threads are performed in the multiple areas, to reduce a conflict of the CAS operations performed concurrently, thereby improving a success rate of the CAS operations.
(2) A read/write lock includes a read lock and a write lock. Only one thread may occupy a read/write lock in a write lock state at one time, but multiple threads may simultaneously occupy a read/write lock in a read lock state. Therefore, when the read/write lock is in the write lock state, before the lock is unlocked, all threads that attempt to lock the lock (including the read lock and the write lock) are blocked. When the read/write lock is in the read lock state, another thread that attempts to lock the read lock can obtain an access permission. However, if the thread wants to lock the write lock, the thread needs to wait until all threads release the lock. Generally, one variable is used to control a status of the read/write lock. CAS operations can be performed between the multiple threads to ensure consistency. In embodiments of this application, the variable used to control a status of the read/write lock may be partitioned, and the multiple threads that concurrently perform the CAS operations are grouped. When a thread in a target group applies for a read lock (that is, when shared data is read), a count value of a corresponding target area in the variable may be modified by performing the CAS operation, and CAS operations concurrently performed by threads in another group are processed in another area, thereby improving a success rate of the CAS.
(3) Compare and swap (compare and swap, CAS) operation: Three values may be passed into the compare and swap operation: a modified target variable address, an original value of a variable, and a new value obtained through modification. When the CAS operation is performed, memory access is exclusively controlled in a specific unit (generally within one cache line (cache line) range). If a value of a target variable in the memory (target variable address) is equal to "an original value of a variable" passed into the CAS operation, the target variable in the memory is changed to "a new value obtained through modification" passed into the CAS operation. If the value of the target variable in the memory is inconsistent with "an original value of a variable" passed into the CAS operation, the modification fails, and a current value of the target variable is passed out. This ensures atomicity of modification of the variable value in a multi-thread concurrency scenario.
(4) Concurrency indicates that multiple threads can run some logic in a time period. Regardless of whether a previous thread that starts to be executed is completed, a current thread may start to be executed without waiting for the previous thread to complete.
(5) "A plurality of" in this application means two or more than two. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects.

First, a technical problem to be specifically resolved in this application is analyzed and proposed. In a conventional technology, a common application scenario of a CAS operation is a read/write lock or another function (for example, pinbuffer/unpinbuffer) that implements a similar read/write function. Refer to the following solution 1 and solution 2.

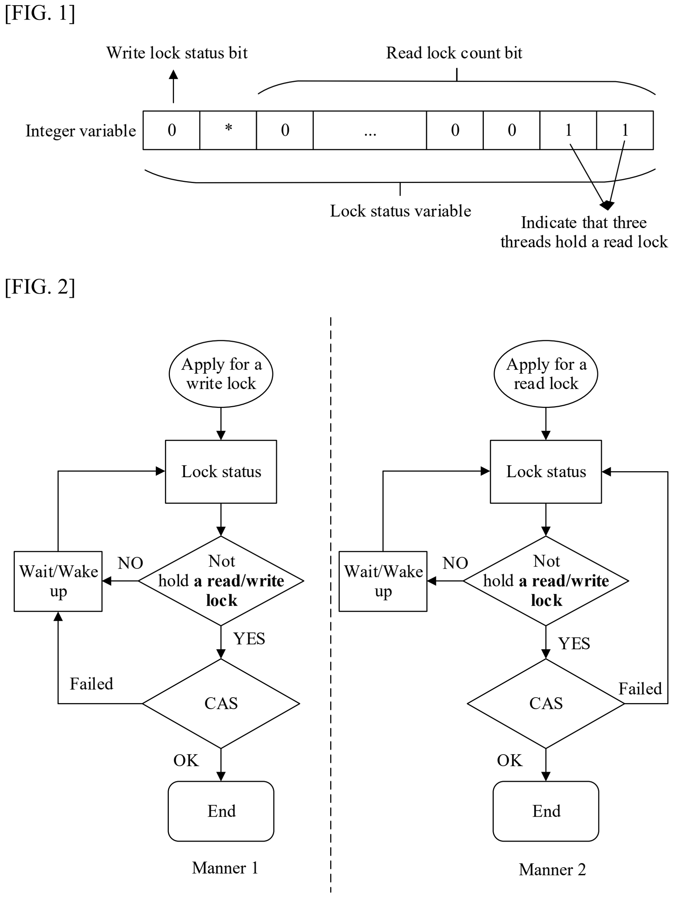

Solution 1: A general implementation of the read/write lock is to perform controlling through a lock status variable. FIG. 1 is a diagram of a structure of a lock status variable. linux rwlock is used as an example. The variable shown in FIG. 1 indicates that currently no thread holds a write lock, and three threads hold a read lock. When the variable is 0, it indicates that the read/write lock is in an idle state, that is, no thread holds a lock (including the read lock and the write lock). When a most significant bit is 1, it indicates that a thread holds the write lock. When the thread releases the write lock, the most significant bit is set to 0. Each time a thread locks the read lock, an increment operation is performed on the variable. When a thread releases the read lock (that is, unlock the read lock), a decrement operation is performed on the variable. To ensure consistency of variable modification among multiple threads, each thread performs synchronization according to an instruction of the CAS operation, to ensure that the variable can be modified by only one thread at one time. Certainly, a write lock status bit does not necessarily need to be in the most significant bit, or not all bits in the variable are used to perform read/write lock counting, and several bits may be used for other customized identification purposes.

The solution 1 has the following disadvantages.

When a large quantity of threads concurrently perform read-only access to a shared resource, a large quantity of read locks are concurrently locked, resulting in a high failure rate of locking the read lock. FIG. 2 is a schematic flowchart of locking a read/write lock. In the foregoing solution 1, when a thread applies for a write lock (as shown in Manner 1 in FIG. 2), a lock status is first determined, to determine whether the lock a read lock or a write lock. If the lock has been locked, the write lock fails to be applied for, and application needs to be performed again (retrying immediately or waiting for being woke up by another to-be-released process). If the lock has not been locked, a write lock status bit of a variable needs to be set to 1 and a CAS atomic operation is performed on the variable. If the modification succeeds, the write lock is successfully locked. If the modification fails, it indicates that another thread has locked the lock first to modify a value of the variable in this period, and the write lock fails to be locked. In this case, retrying, waiting, or another process are entered. When a thread applies for a read lock (for example, Manner 2 in FIG. 2), a lock status is first determined, to determine whether the lock is a write lock. If the write lock has been locked, the read lock fails to be applied for, and application needs to be performed again (retrying immediately or waiting for being woke up by another to-be-released process). If the write lock has not been locked, a read lock count bit of a variable needs to be added by 1 and a CAS atomic operation is performed on the variable. If the modification succeeds, the read lock is successfully locked. If the modification fails, it indicates that another thread has modified a value of the variable in this period. That is, when multiple threads concurrently lock the read lock, another thread successfully locks the read lock, and therefore a current thread fails to lock the read lock and enters retrying or another process. In a normal case, a procedure of locking the read lock is retried immediately based on a latest value of the current lock status variable.

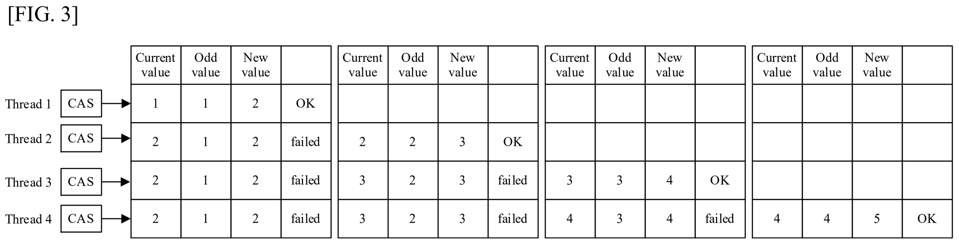

It can be learned that when two threads simultaneously lock a read lock, a CAS operation of one thread fails. After a latest lock status is determined, if a write lock is not locked, the read lock is immediately locked again. Further, when a large quantity of threads concurrently perform read-only access to a shared resource, a large quantity of read locks are concurrently locked, a quantity of failures of locking the read lock increases, and a failure rate increases sharply. FIG. 3 is a diagram of a result of CAS operations simultaneously performed by multiple threads. For example, four threads simultaneously lock a read lock. A current value is read in a memory that stores a lock status variable, and an old value and a new value are passed values of the CAS operation. In four rounds of CAS operations performed concurrently, there are four times of valid CAS operations (that is, OK), and there are six times of invalid CAS operations (that is, failed), that is, a quantity of successful modification times by performing the CAS operations is 4, and a quantity of failures is 6 (three times in a first round, two times in a second round, and one time in a third round). Overheads for each CAS operation are high, and synchronous memory access between multiple cores and across chips is required. This occupies memory bandwidth and computing resources.

Solution 2: Another function (for example, pinbuffer/unpinbuffer) that implements a similar read/write function is used to perform sharing, exclusive occupying, and other status identifier control on a data page. The sharing uses sharing counting, and is similar to locking a read lock and unlocking a read lock. pinbuffer may be simply understood as locking the read lock, and unpinbuffer may be simply understood as unlocking the read lock. A Kunpeng 2P+openGauss (open-source Gauss) scenario is used as an example. When multiple threads perform high-concurrency query on a same table (data that can be shared), each query requires read-only access to an index root directory. Similar to high concurrency of the CAS operations for locking the read lock, the problem in Solution 1 also exists. A failure rate of the CAS operations is high, a large quantity of CAS operations are retried due to failures, and CAS instructions account for 51% of CPU overheads of an entire server.

Therefore, this application provides a multi-thread concurrency management method and a related apparatus, used in a scenario in which multiple threads concurrently perform CAS operations, to improve a success rate of the CAS operations. Specifically, a global variable of shared data is divided into multiple areas, and multiple threads that apply for reading the shared data are grouped into multiple thread groups, so that one thread group corresponds to one variable area, and different thread groups correspond to different variable areas. Therefore, when threads in the different thread groups apply for reading the shared data, a permission to read the shared data may be obtained by modifying a value of a corresponding variable area. When the shared data is applied to be read, modification of values of the different variable areas is independent between the threads of the different thread groups, so that a value of each variable area can be successfully modified. Therefore, when the multiple threads apply for reading the shared data and CAS operations performed concurrently modify the values of the different variable areas, multiple CAS operations may succeed, thereby improving a success rate of the CAS operations.

To better understand the multi-thread concurrency management method provided in embodiments of this application, the following describes a system architecture and/or an application scenario of the multi-thread concurrency management method provided in embodiments of this application. It may be understood that the system architecture and the application scenario that are described in embodiments of this application are intended to describe technical solutions in embodiments of this application more clearly, and do not constitute a limitation on the technical solutions provided in embodiments of this application.

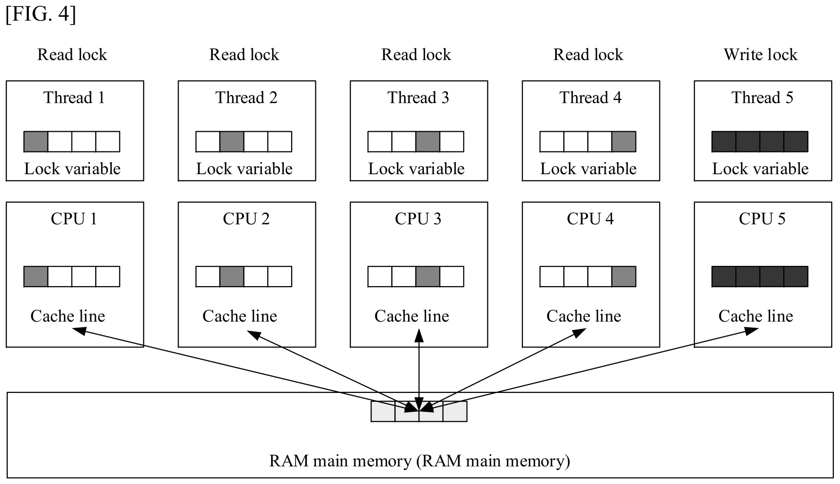

For the system architecture to which the multi-thread concurrency management method provided in embodiments of this application may be applied, refer to FIG. 4. FIG. 4 is a diagram of a system architecture to which a multi-thread concurrency management method is applied according to an embodiment of this application. The system architecture may include one or more central processing units (Central Processing Unit, CPU), one or more graphics processing units (Graphics Processing Unit, GPU), or one or more system on chips (System on Chip, SOC), and include a memory. A basic unit for independent running and independent scheduling of the processor is a thread. For example, the system architecture shown in FIG. 4 includes a plurality of CPUs (for example, a CPU 1 to a CPU 5). Any CPU (for example, the CPU 1) may be configured to perform the multi-thread concurrency management method provided in embodiments of this application. First, a global variable used to control multiple threads to access shared data is divided into multiple variable sub-areas, and multiple threads that are in the plurality of CPUs and that request to read the shared data are grouped. When the multiple CPU concurrent threads read the shared data in the memory, threads in different thread groups may be authorized to modify flag bits in different variable sub-areas. If a thread successfully modifies a flag bit, the CPU 1 may allow the thread to read the shared data in the memory. For example, when the CPU 1 independently runs and schedules a thread 1 to apply for reading the shared data in the memory (for example, applying for a read lock), the thread 1 may modify only a flag bit in a first partition of the global variable (for example, a lock status variable). After the modification succeeds, the thread 1 may read the shared data. When the CPU 2 independently runs and schedule a thread 2 to apply for reading the shared data, the thread 2 may modify only a flag bit in a second partition of the global variable. After the modification succeeds, the thread 2 may read the shared data. Similarly, the CPU 3 runs or schedules a thread 3 and the CPU 4 runs or schedules a thread 4 to apply for reading the shared data. The thread 3 and the thread 4 may respectively modify a flag bit in a third partition and a flag bit in a fourth partition. After the modification succeeds, the thread 3 and the thread 4 may read the shared data. A length of the global variable may be 1 byte to 16 bytes, or may even be longer or shorter. Ranges in different system architecture instruction sets may be different. In FIG. 4, an example in which the length of the global variable is equal to a length of a cache line (cache line) is merely used, and should not constitute a limitation on this application. It should be noted that each partition of the global variable may further include a control status bit (for example, a write lock status bit). When a CPU runs or schedules a thread to apply for exclusively occupying the shared data, the CPU may modify the control status bit in each partition. As shown in FIG. 4, when the CPU 5 runs or schedules a thread 5 to exclusively occupy the shared data in the memory, a control status bit in each partition in four partitions may be modified. After the modification succeeds, the thread 5 may perform an operation such as reading/writing on the shared data.

It should be noted that embodiments of this application may be applied to various computer system architectures. The computer architecture in FIG. 4 is merely an example implementation in embodiments of this application. An architecture to which embodiments of this application can be applied includes but is not limited to the foregoing architecture. It should be understood that the computer architecture may have more or fewer units/modules than those shown in the figure, or may combine two or more units/modules, or may have different unit/module configurations. Various units/modules may be implemented by using hardware including one or more signal processors and/or application-specific integrated circuits, software, or a combination of hardware and software.

It may be understood that the multi-thread concurrency management method provided in embodiments of this application may be performed by an electronic device. The electronic device is a device that can be abstracted as a computer system. The electronic device that supports the foregoing multi-thread concurrency management function may also be referred to as a multi-thread concurrency management apparatus. The multi-thread concurrency management apparatus may be an entire device of the electronic device, for example, a server, a vehicle-mounted computer, or a terminal device. The terminal device may be an intelligent wearable device, a smartphone, a tablet computer, a notebook computer, or a desktop computer. Alternatively, the terminal device may be a system/apparatus including a plurality of entire devices. Alternatively, the terminal device may be some components in the electronic device, for example, a chip related to a multi-thread concurrency management function, such as a processor or a system chip (system on a chip, SoC). This is not specifically limited in embodiments of this application. The system chip is also referred to as a system on chip. It may be understood that the multi-thread concurrency management method provided in embodiments of this application may also be applied to an operating system, a database, application software, middleware, or bottom-layer software of the electronic device.

For ease of understanding, with reference to more accompanying drawings, the following describes the technical solutions provided in this application.

In this application, unless otherwise specified, for same or similar parts of embodiments or implementations, refer to each other. In embodiments of this application and the implementations/methods/implementation methods in embodiments, unless otherwise specified or a logical conflict occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logical relationship thereof. The following implementations of this application are not intended to limit the protection scope of this application.

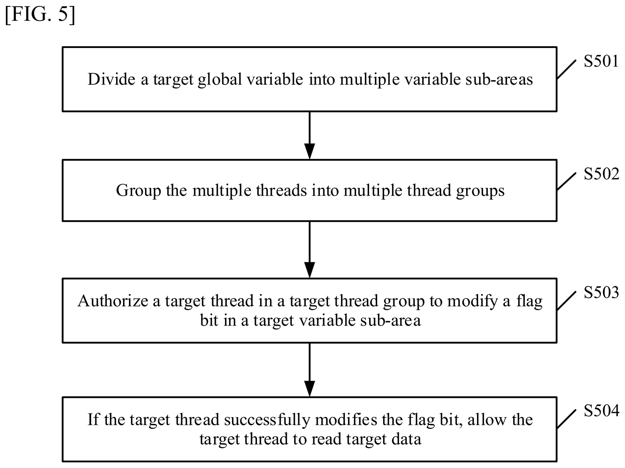

FIG. 5 is a schematic flowchart of a multi-thread concurrency management method according to an embodiment of this application. The method includes but is not limited to the following steps.

S501: Divide a target global variable into multiple variable sub-areas.

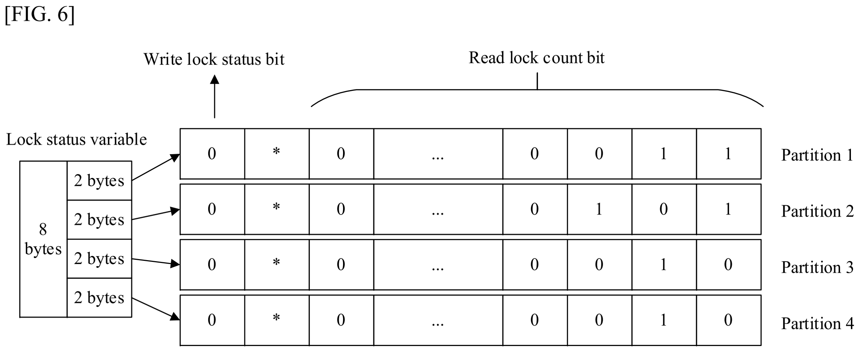

Specifically, the target global variable is used to control multiple threads to access target data. The target data is a resource that may be shared by the multiple threads, and may be generally referred to as shared data or a shared resource. The target data may be specific data, for example, may be a table that is shared for query; or the target data may be a critical section (critical section), that is, may be a program segment that accesses a shared resource (for example, a shared device or a shared memory). To ensure integrity of the target data, a global variable (that is, the target global variable) used to control the multiple threads to access the target data needs to be set. After the global variable is divided into areas, multiple variable sub-areas are obtained, where each variable sub-area may include one or more flag bits, and subsequently threads in different thread groups may modify flag bits in different variable sub-areas. An example in which the global variable is a lock status variable is used. In this case, the flag bit may be referred to as a read lock count bit. For example, FIG. 6 is a diagram of a structure of a lock status variable partition according to an embodiment of this application. For example, a length of the lock status variable is 8 bytes. In the figure, the lock status variable is divided into four 2-byte areas (including a partition 1, a partition 2, a partition 3, and a partition 4). Each partition may include one or more read lock count bits. Optionally, when the global variable is divided into the areas, the areas may be equal (as shown in FIG. 6), or may be unequal. For example, four variable sub-areas whose lengths are 1 byte, 1 byte, 2 bytes, and 4 bytes may be obtained through division. This is not specifically limited herein. Optionally, a length of the variable sub-area may be obtained through division based on quantities of threads in the different thread groups. When a quantity of threads in a thread group is large, a length of a variable sub-area corresponding to the thread group may be longer. On the contrary, when a quantity of threads in a thread group is small, a length of a variable sub-area corresponding to the thread group may be shorter.

It should be noted that, to ensure consistency of modification of the flag bit in the variable sub-area, the thread generally modifies the flag bit by performing an atomic operation (for example, a CAS operation). Currently, a minimum operable unit of the atomic operation is 1 byte. Therefore, a minimum length of a single variable sub-area in the global variable needs to be 1 byte. A maximum length of the entire global variable supports a maximum quantity of bytes (for example, cache line (cache line)) that can be used by a computer to perform the atomic operation. It may be understood that, with development of computer technologies, if the minimum unit and the maximum unit that can be used to perform the atomic operation change, in embodiments of this application, length ranges that can be supported by the global variable and the variable sub-area may also change accordingly. That is, currently, that the minimum length of the single variable sub-area is 1 byte and the maximum length of the entire global variable is the cache line should not constitute a limitation on embodiments of this application.

S502: Group the multiple threads into multiple thread groups.

S503: Authorize a target thread in a target thread group to modify a flag bit in a target variable sub-area.

Specifically, multiple threads that apply for reading the target data may be grouped, so that the threads in the multiple thread groups may respectively modify the flag bits in the multiple variable sub-areas, and the thread in the target thread group modifies the flag bit in the target variable sub-area. One thread group corresponds to one variable sub-area, and different thread groups correspond to different variable sub-areas, that is, one thread group in the multiple thread groups one-to-one corresponds to one variable sub-area in the multiple variable sub-areas. For example, the multiple threads may need to read the target data in a process of executing a task, and therefore apply for a permission to read the target data. In other words, the foregoing multiple threads may not only be used to apply for the permission to read the target data, but also be used to complete another task.

Optionally, when the target thread group in the multiple thread groups includes multiple threads, only one thread in the target thread group is allowed to successfully modify a flag bit in a variable sub-area (that is, the target variable sub-area) corresponding to the target thread group in one clock cycle. That is, when multiple threads in a same thread group concurrently modify a flag bit in a variable sub-area corresponding to the thread group, only one thread can successfully modify the flag bit, to ensure consistency of modification of the flag bit in the variable sub-area and avoid confusion. Another thread that fails to modify the flag bit in the same thread group may re-attempt to modify the flag bit in the variable sub-area corresponding to the thread group.

Optionally, the threads may be grouped based on IDs of the threads. For example, a thread 0 to a thread 9 belong to a first group, a thread 10 to a thread 19 belong to a second group, and a thread 20 to a thread 29 belong to a third group. The threads may alternatively be grouped by marking a group of a thread when the thread is created. For example, a thread created by a CPU 1 is marked as a first group, a thread created by a CPU 2 is marked as a second group, and a thread created by a CPU 3 is marked as a third group.

S504: If the target thread successfully modifies the flag bit, allow the target thread to read the target data.

Specifically, if a thread in the multiple thread groups successfully modifies the flag bit when attempting to modify the flag bit, the thread may apply for a request for reading the target data, that is, the thread is allowed to read the target data.

For ease of understanding, for the example in which the global variable (lock status variable) is divided into the four variable sub-areas in FIG. 6, when the multiple threads are grouped, the multiple threads may be grouped into four groups (including a first group, a second group, a third group, and a fourth group). For example, a thread in the first group may modify a flag bit (a read lock count bit) in the partition 1, a thread in the second group may modify a flag bit in the partition 2, and by analogy. In other words, when the thread in the first group applies for reading the target data, it is equivalent to applying for locking a read lock. The thread may determine, based on a group of a thread group in which the thread is located, a lock status for two bytes (for example, the partition 1) corresponding to the thread group, determine whether no thread holds a write lock, and then modify a read lock count bit of the two bytes (for example, an atomic increment operation). If the modification succeeds, the thread holds the read lock. Corresponding to applying for reading, there is releasing. When the thread in the first group needs to release the target data, it is equivalent to applying for unlocking a read lock. The thread modifies, based on a group of a thread group in which the thread is located, a read lock count bit for two bytes (partition 1) corresponding to the thread group (an atomic decrement operation). If the modification succeeds, the thread releases the read lock.

In a possible implementation, each variable sub-area may further include a control status bit, and the control status bit is used to indicate whether the target data is exclusively occupied. The example in which the global variable is the lock status variable is still used. The control status bit is a write lock status bit, and the write lock status bit is used to indicate whether a thread holds a write lock. Refer to the structure of the lock status variable partition shown in FIG. 6. In addition to the read lock count bit, each partition further includes the write lock status bit. In addition to steps S501 to S504, the foregoing method may further include step S505 and step S506.

S505: When a first thread in the target thread group in the multiple thread groups applies for exclusively occupying the target data, authorize the first thread to modify the control status bit in each variable sub-area.

S506: If the first thread successfully modifies the control status bit, allow the first thread to exclusively occupy the target data.

Specifically, if a thread in the multiple thread groups applies for exclusively occupying the target data, the thread needs to modify the control status bit in each variable sub-area. If the thread successfully modifies the control status bit, the thread may apply for a request for exclusively occupying the target data, that is, the thread is allowed to exclusively occupy the target data. The example in which, as shown in FIG. 6, the global variable is the lock status variable, the length of the lock status variable is 8 bytes, and the four variable sub-areas are all 2 bytes is still used. The control status bit is the write lock status bit. When a thread in the multiple thread groups applies for exclusively occupying the target data, it is equivalent to applying for locking a write lock. The thread needs to determine lock statuses of the 8 bytes to determine whether no thread holds a write lock or a read lock, and then modify a write lock status bit in each 2-byte partition (for example, an atomic increment operation). If the modification succeeds, the thread holds the write lock. Corresponding to applying for exclusively occupying, there is also releasing exclusively occupying. When a thread needs to release exclusive occupying on the target data, it is equivalent to applying for unlocking a write lock. The thread modifies a write lock status bit in each 2-byte partition (for example, an atomic decrement operation). If the modification succeeds, the thread releases the write lock.

In a possible implementation, in addition to steps S501 to S506, the method may further include step S507.

S507: Determine, based on a status of the flag bit in each variable sub-area, a total quantity of threads that can currently read the target data.

Specifically, when the total quantity of threads that are currently allowed to read the target data needs to be counted, the total quantity may be determined based on a flag bit status of each variable sub-area. The example in which, as shown in FIG. 6, the global variable is the lock status variable, the length of the lock status variable is 8 bytes, and the four variable sub-areas are all 2 bytes is still used. When a total quantity of threads that currently hold a read lock needs to be determined, quantities of threads that hold the read lock and that are indicated by the read lock count bit in each variable sub-area may be summed up to obtain the total quantity of threads that hold the read lock. For example, a read lock count bit in the partition 1 indicates that three threads hold the read lock, the partition 2 indicates that five threads hold the read lock, the partition 3 indicates that two threads hold the read lock, and the partition 4 indicates that two threads hold the read lock. In this case, the total quantity of threads that hold the read lock is 12.

Optionally, in some scenarios, for example, when a read/write lock is in a read lock state, there is another scenario in which a thread attempts to apply for locking a write lock. In this case, a request for applying for locking the write lock fails, and the thread may temporarily sleep. However, after the thread applies for locking the write lock, the read/write lock usually blocks a subsequent request for locking the read lock, to avoid long-term waiting of the thread that requests to lock the write lock due to long-term occupation of the read lock status. When a last thread that holds the read lock releases the read lock, that is, when it is determined that a total quantity of threads that can currently read the target data is 0, the thread that temporarily sleeps due to the failure in applying for locking the write lock previously may be woken up. Then, the request for locking the write lock of the thread is used to enable the thread to hold the write lock, so as to allow the thread to perform operations such as reading and writing on the target data.

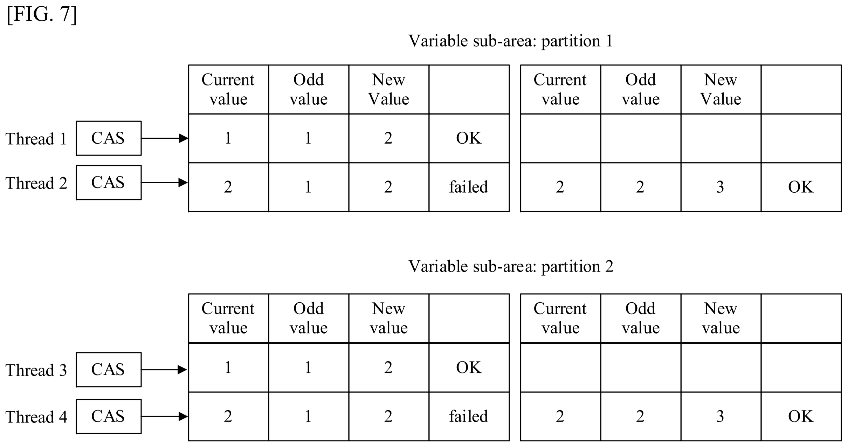

It should be noted that, in a low-concurrency scenario, that is, when a conflict of locking/unlocking the read lock is not obvious, performance of a computer system may not be greatly changed in embodiments of this application. However, in a high-concurrency scenario, that is, when a conflict of locking/unlocking the read lock among the multiple threads is obvious, more variable sub-areas that can be independently modified during locking/unlocking the read lock indicate more threads that can successfully complete locking/unlocking of the read lock, and indicates a more obvious performance gain obtained by the computer system. FIG. 7 is a diagram of a result of CAS operations simultaneously performed by multiple thread groups according to an embodiment of this application. For example, four threads simultaneously lock a read lock, the four threads are grouped into two groups, and each group has two threads. A current value is read in a memory that stores a lock status variable, and an old value and a new value are passed values of the CAS operation. In two rounds of CAS operations performed concurrently, there are four times of valid CAS operations, and there are two times of invalid CAS operations. The quantity of times of invalid CAS operations is reduced from 6 in the example in FIG. 3 to 2, and the quantity of concurrent rounds is also reduced from 4 to 2. When a thread 1 and a thread 2 in a first group simultaneously lock a read lock (a first round of concurrency), only one thread (for example, the thread 1) can successfully modify a flag bit in a variable sub-area corresponding to the thread group. Then, the thread 2 may immediately re-attempt to lock the read lock (a second round) based on a latest value in the current variable sub-area, and successfully modify the flag bit in the variable sub-area and hold the read lock. Similarly, when a thread 3 and a thread 4 in a second group performs a first round of concurrency, one thread (for example, the thread 3) successfully modifies a flag bit and holds a read lock. Then, the other thread may successfully modify the flag bit in a second round and also hold the read lock.

Further, if the four threads are grouped into four groups, and each group has one thread, that is, the four threads are in different thread groups, when the four threads concurrently apply for locking a read lock, a flag bit in a variable sub-area corresponding to each thread group may be modified. In this case, from a perspective of the variable sub-area, only one thread applies for modifying the flag bit. Therefore, the four threads can successfully modify the flag bit in the variable sub-area in one round of concurrency, that is, a quantity of failures of modification is 0.

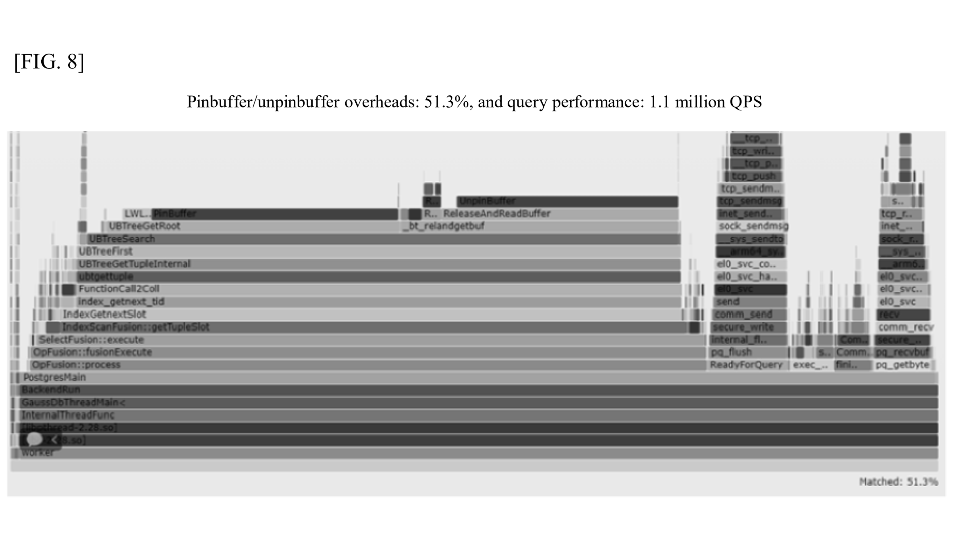

When embodiments of this application are used in a scenario in which another function that implements a similar read/write function (for example, pinbuffer/unpinbuffer), performance of the computer system can also be greatly improved. The pinbuffer/unpinbuffer function implements the similar read/write function, and may perform sharing, exclusive occupying, and other status identifier control on a data page. The sharing uses sharing counting (similar to locking/unlocking a read lock). Each time the thread queries the data page, the thread needs to lock the read lock on an index root directory page. In a Kunpeng 2P+openGauss (open-source Gaussian) scenario, a quantity of same-page sharing concurrent accesses is excessively large. When the multi-thread concurrency management method in embodiments of this application is not used, for performance of the computer system, refer to FIG. 8. FIG. 8 is a performance analysis perf flame diagram according to an embodiment of this application. When query performance of openGausss is 1.1 million queries per second (query per second, QPS), overheads for atomic operation instructions for locking/unlocking the read lock exceeds 50%, and a CPU is fully loaded.

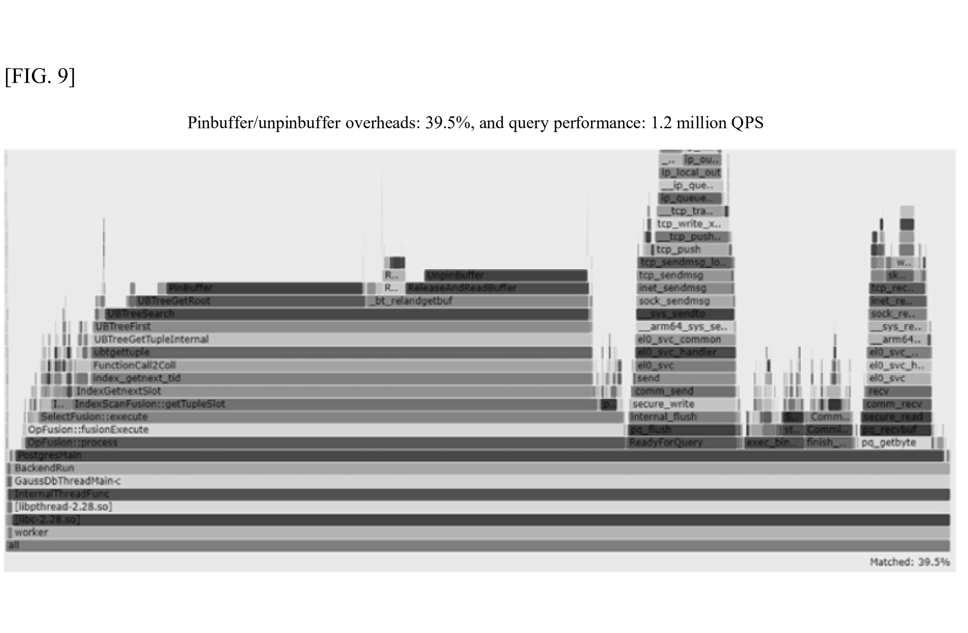

In the multi-thread concurrency management method in embodiments of this application, when two variable sub-areas are obtained through division, two thread groups are obtained through grouping, and flag bits in the variable sub-areas are modified in two paths, for performance of the computer system, refer to FIG. 9. FIG. 9 is another performance analysis perf flame diagram according to an embodiment of this application. Query performance of openGauss is improved to 1.2 million QPS, and overheads for atomic operation instructions for locking/unlocking the read lock are reduced to 39.5%.

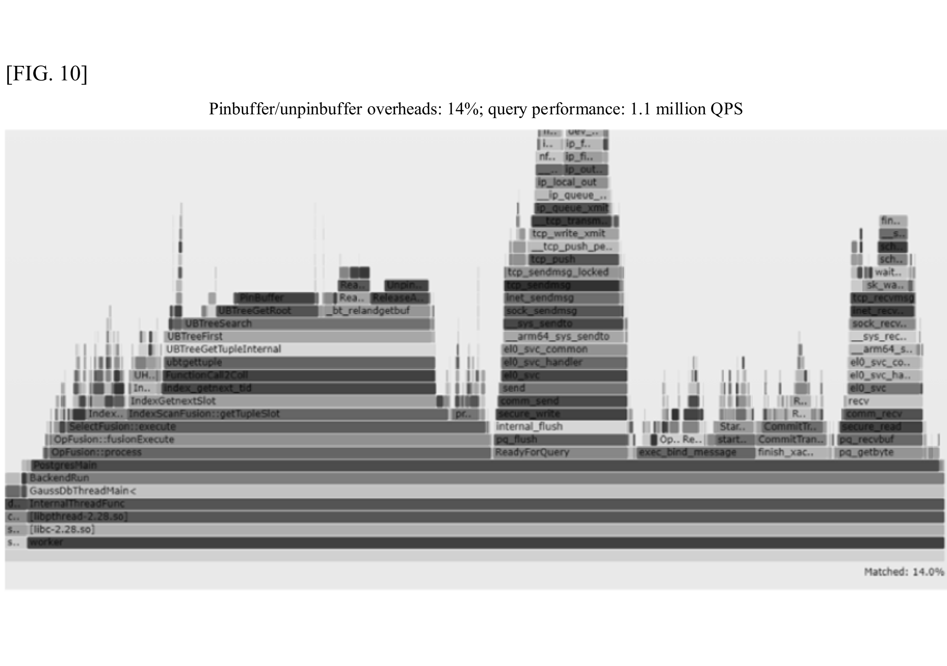

Further, when six variable sub-areas obtained through division, six thread groups obtained through grouping, and flag bits in the variable sub-areas are modified in six groups, for performance of the computer system, refer to FIG. 10. FIG. 10 is another performance analysis perf flame diagram according to an embodiment of this application. Query performance of openGauss is improved to 1.56 million QPS, and overheads for atomic operation instructions for locking/unlocking the read lock are reduced to 14%. Compared with the performance shown in FIG. 8, query performance of openGauss is improved by 41%, and performance of locking/unlocking the read lock is improved by 5 times.

In conclusion, this application proposes the multi-thread concurrency management method. The global variable used to control the multiple threads to access the shared data is divided into the multiple areas, and the multiple threads that apply for reading the shared data are grouped into the multiple thread groups, so that one thread group corresponds to one variable area, and different thread groups correspond to different variable areas. Therefore, when the threads in the different thread groups apply for reading the shared data, the permission to read the shared data may be obtained by modifying the value of the corresponding variable area. When the shared data is applied to be read, modification of values of the different variable areas is independent between the threads of the different thread groups, so that a value of each variable area can be successfully modified. That is, in a round of concurrent modification, multiple threads may perform successful modification. Therefore, when the foregoing method is used in the scenario in which the multiple threads concurrently perform the CAS operations, if the multiple threads apply for reading the shared data, and the CAS operations performed concurrently modify the values of the different variable areas, the multiple CAS operations may succeed, thereby improving the success rate of the CAS operations.

The foregoing describes in detail the methods in embodiments of this application. The following briefly describes related apparatuses in embodiments of this application.

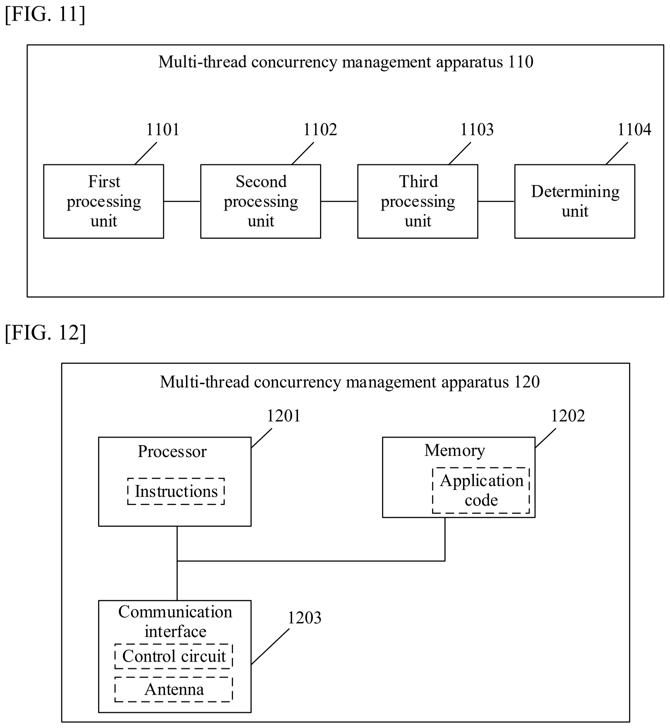

FIG. 11 is a diagram of a structure of a multi-thread concurrency management apparatus according to an embodiment of this application. An apparatus 110 may include a first processing unit 1101, a second processing unit 1102, and a third processing unit 1103, and may further include a determining unit 1104. The units are described in detail below.

The first processing unit 1101 is configured to divide a target global variable into multiple variable sub-areas, where the target global variable is used to control multiple threads to access target data, and each variable sub-area in the multiple variable sub-areas includes one or more flag bits.

The second processing unit 1102 is configured to: group the multiple threads into multiple thread groups, where the multiple threads are used to apply for a permission to read the target data, and

authorize a target thread in a target thread group to modify a flag bit in a target variable sub-area, where the target thread group is one thread group in the multiple thread groups, the target variable sub-area is one variable sub-area in the multiple variable sub-areas, and one thread group in the multiple thread groups one-to-one corresponds to one variable sub-area in the multiple variable sub-areas; and

The third processing unit 1103 is configured to: if the target thread successfully modifies the flag bit, allow the target thread to read the target data.

In a possible implementation, the apparatus further includes:
the determining unit 1104, configured to determine, based on a status of the flag bit in each variable sub-area, a total quantity of threads that can currently read the target data.

In a possible implementation, when the target thread group in the multiple thread groups includes multiple threads, one thread in the target thread group is allowed to successfully modify the flag bit in the target variable sub-area corresponding to the target thread group in one clock cycle.

In a possible implementation, the second processing unit 1102 is specifically configured to:
if currently no thread exclusively occupies the target data, authorize the target thread in the target thread group to modify the flag bit in the target variable sub-area by performing a compare and swap CAS operation.

In a possible implementation, each variable sub-area further includes a control status bit, and the control status bit is used to indicate whether the target data is exclusively occupied; and the second processing unit 1102 is further configured to: when a first thread in the target thread group in the multiple thread groups applies for exclusively occupying the target data, authorize the first thread to modify the control status bit in each variable sub-area.

The third processing unit 1103 is further configured to: if the first thread successfully modifies the control status bit, allow the first thread to exclusively occupy the target data.

In a possible implementation, the second processing unit 1102 is specifically configured to:
if currently no thread exclusively occupies or reads the target data, authorize the first thread to modify the control status bit in each variable sub-area by performing a CAS operation.

In a possible implementation, the global variable is a lock status variable, the flag bit is a read lock count bit, and modification of the flag bit in the variable sub-area by a thread in the multiple thread groups is used to lock or unlock a read lock.

In a possible implementation, the global variable is a lock status variable, the control status bit is a write lock status bit, and modification of the control status bit in the variable sub-area by a thread in the multiple thread groups is used to lock or unlock a write lock.

It should be noted that, for functions of functional units/modules of the multi-thread concurrency management apparatus described in embodiments of this application, refer to related descriptions in the foregoing method embodiments. Details are not described herein again.

As shown in FIG. 12, FIG. 12 is a diagram of a structure of another multi-thread concurrency management apparatus according to an embodiment of this application. The apparatus 120 includes at least one processor 1201, at least one memory 1202, and at least one communication interface 1203. In addition, the device may further include a general-purpose component such as an antenna, and details are not described herein.

The processor 1201 may be a general central processing unit (CPU), a microprocessor, an application-specific integrated circuit (application-specific integrated circuit, ASIC), or one or more integrated circuits for controlling execution of the foregoing solution program.

The communication interface 1203 is configured to communicate with another device or a communication network, for example, the Ethernet, a radio access network (RAN), a core network, or a wireless local area network (wireless local area network, WLAN).

The memory 1202 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer. However, the memory 1202 is not limited thereto. The memory may exist independently, and is connected to the processor through the bus. The memory may alternatively be integrated with the processor.

The memory 1202 is configured to store application program code used to perform the multi-thread concurrency management method, and the processor 1201 controls the execution. The processor 1201 is configured to execute the application program code stored in the memory 1202.

The code stored in the memory 1202 may execute the multi-thread concurrency management method provided in FIG. 5. For example, a target global variable is divided into multiple variable sub-areas, where the target global variable is used to control multiple threads to access target data, and each variable sub-area in the multiple variable sub-areas includes one or more flag bits; the multiple threads are grouped into multiple thread groups, where the multiple threads are used to apply for a permission to read the target data; a target thread in a target thread group is authorized to modify a flag bit in a target variable sub-area, where the target thread group is one thread group in the multiple thread groups, the target variable sub-area is one variable sub-area in the multiple variable sub-areas, and one thread group in the multiple thread groups one-to-one corresponds to one variable sub-area in the multiple variable sub-areas; and if the target thread successfully modifies the flag bit, the target thread is allowed to read the target data.

It should be noted that, for functions of functional units in the multi-thread concurrency management apparatus 120 described in embodiments of this application, refer to related descriptions of step S501 to step S504 in the method embodiment in FIG. 5. Details are not described herein again.

It should be noted that the multi-thread concurrency management apparatus described in this application is not limited thereto. The multi-thread concurrency management apparatus may be located in any electronic device, such as a server, a computer, a computer, a mobile phone, or a tablet. The multi-thread concurrency management apparatus may be specifically a chip, a chip set, or a circuit board on which a chip or a chip set is mounted. The chip, the chip set, or the circuit board on which the chip or the chip set is mounted may work when driven by necessary software. For example, the multi-thread concurrency management apparatus may be:
(1) an independent integrated circuit IC, a chip, a chip system, or a subsystem;
(2) a set including one or more ICs, where optionally, the set of ICs may further include a storage component configured to store data and a computer program;
(3) a module that can be embedded in another device; and
(4) another device or the like.

An embodiment of this application further provides a computer-readable storage medium. The computer-readable storage medium stores computer program code. When a processor executes the computer program code, a computer is enabled to perform the method in any one of the foregoing embodiments.

An embodiment of this application further provides an electronic device. The electronic device may exist in a product form of a chip, the electronic device includes a processor, and the processor is configured to support the electronic device in implementing a corresponding function in the method in any one of the foregoing embodiments. The electronic device may further include a memory. The memory is configured to be coupled to the processor, and the memory stores program instructions and data that are necessary for the electronic device. The electronic device may further include a communication interface, configured to implement communication between the electronic device and another device or a communication network.

An embodiment of this application further provides a computer program product. When the computer program product is run on a computer, the computer is enabled to perform the method in any of the foregoing embodiments.

An embodiment of this application provides a chip system. The chip system includes a processor, configured to support a device to implement functions in the first aspect, for example, generating or processing information in the multi-thread concurrency management method. In a possible design, the chip system further includes a memory, and the memory is configured to store program instructions and data that are necessary for the device. The chip system may include a chip, or may include a chip and another discrete component.

In the foregoing embodiments, the description of each embodiment has respective focuses. For a part that is not described in detail in an embodiment, refer to related descriptions in other embodiments.

It should be noted that, for brief description, the foregoing method embodiments are represented as a series of actions. However, persons skilled in the art should appreciate that this application is not limited to the described order of the actions, because according to this application, some steps may be performed in other orders or simultaneously. It should be further appreciated by persons skilled in the art that embodiments described in this specification all belong to example embodiments, and the involved actions and modules are not necessarily required by this application.

In the several embodiments provided in this application, it should be understood that the disclosed apparatus may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The foregoing units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments in this application.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the foregoing integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device, specifically, may be a processor in the computer device) to perform all or some of the steps of the methods described in embodiments of this application. The foregoing storage medium may include: any medium that can store program code, such as a USB flash drive, a removable hard disk, a magnetic disk, an optical disc, a read-only memory (read-only memory, ROM for short), or a random access memory (random access memory, RAM for short).

The foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. A multi-thread concurrency management method, wherein the method comprises:
dividing a target global variable into multiple variable sub-areas, wherein the target global variable is used to control multiple threads to access target data, and each variable sub-area in the multiple variable sub-areas comprises one or more flag bits;
grouping the multiple threads into multiple thread groups, wherein the multiple threads are used to apply for a permission to read the target data;
authorizing a target thread in a target thread group to modify a flag bit in a target variable sub-area, wherein the target thread group is one thread group in the multiple thread groups, the target variable sub-area is one variable sub-area in the multiple variable sub-areas, and one thread group in the multiple thread groups one-to-one corresponds to one variable sub-area in the multiple variable sub-areas; and
if the target thread successfully modifies the flag bit, allowing the target thread to read the target data.

2. The method according to claim 1, wherein the method further comprises:
determining, based on a status of the flag bit in each variable sub-area, a total quantity of threads that can currently read the target data.

3. The method according to claim 1 or 2, wherein when the target thread group comprises multiple threads, one thread in the target thread group is allowed to successfully modify the flag bit in the target variable sub-area in one clock cycle.

4. The method according to any one of claims 1 to 3, wherein authorizing the target thread in the target thread group to modify the flag bit in the target variable sub-area comprises:
if currently no thread exclusively occupies the target data, authorizing the target thread in the target thread group to modify the flag bit in the target variable sub-area by performing a compare and swap CAS operation.

5. The method according to any one of claims 1 to 4, wherein each variable sub-area further comprises a control status bit, and the control status bit is used to indicate whether the target data is exclusively occupied; and the method further comprises:
when a first thread in the target thread group applies for exclusively occupying the target data, authorizing the first thread to modify the control status bit in each variable sub-area; and
if the first thread successfully modifies the control status bit, allowing the first thread to exclusively occupy the target data.

6. The method according to claim 5, wherein authorizing the first thread to modify the control status bit in each variable sub-area comprises:
if currently no thread exclusively occupies or reads the target data, authorizing the first thread to modify the control status bit in each variable sub-area by performing a CAS operation.

7. The method according to any one of claims 1 to 6, wherein the global variable is a lock status variable, the flag bit is a read lock count bit, and modification of the flag bit in the variable sub-area by a thread in the multiple thread groups is used to lock or unlock a read lock.

8. The method according to claim 5 or 6, wherein the global variable is a lock status variable, the control status bit is a write lock status bit, and modification of the control status bit in the variable sub-area by a thread in the multiple thread groups is used to lock or unlock a write lock.

9. A multi-thread concurrency management apparatus, comprising:
a first processing unit, configured to divide a target global variable into multiple variable sub-areas, wherein the target global variable is used to control multiple threads to access target data, and each variable sub-area in the multiple variable sub-areas comprises one or more flag bits;
a second processing unit, configured to: group the multiple threads into multiple thread groups, wherein the multiple threads are used to apply for a permission to read the target data, and authorize a target thread in a target thread group to modify a flag bit in a target variable sub-area,
wherein the target thread group is one thread group in the multiple thread groups, the target variable sub-area is one variable sub-area in the multiple variable sub-areas, and one thread group in the multiple thread groups one-to-one corresponds to one variable sub-area in the multiple variable sub-areas; and
a third processing unit, configured to: if the target thread successfully modifies the flag bit, allow the target thread to read the target data.

10. The apparatus according to claim 9, wherein the apparatus further comprises:
a determining unit, configured to determine, based on a status of the flag bit in each variable sub-area, a total quantity of threads that can currently read the target data.

11. The apparatus according to claim 9 or 10, wherein when the target thread group comprises multiple threads, one thread in the target thread group is allowed to successfully modify the flag bit in the target variable sub-area in one clock cycle.

12. The apparatus according to any one of claims 9 to 11, wherein the second processing unit is specifically configured to:
if currently no thread exclusively occupies the target data, authorize the target thread in the target thread group to modify the flag bit in the target variable sub-area by performing a compare and swap CAS operation.

13. The apparatus according to any one of claims 9 to 12, wherein each variable sub-area further comprises a control status bit, and the control status bit is used to indicate whether the target data is exclusively occupied; and the second processing unit is further configured to: when a first thread in the target thread group applies for exclusively occupying the target data, authorize the first thread to modify the control status bit in each variable sub-area; and
the third processing unit is further configured to: if the first thread successfully modifies the control status bit, allow the first thread to exclusively occupy the target data.

14. The apparatus according to claim 13, wherein the second processing unit is specifically configured to:
if currently no thread exclusively occupies or reads the target data, authorize the first thread to modify the control status bit in each variable sub-area by performing a CAS operation.

15. The apparatus according to any one of claims 9 to 14, wherein the global variable is a lock status variable, the flag bit is a read lock count bit, and modification of the flag bit in the variable sub-area by a thread in the multiple thread groups is used to lock or unlock a read lock.

16. The apparatus according to claim 13 or 14, wherein the global variable is a lock status variable, the control status bit is a write lock status bit, and modification of the control status bit in the variable sub-area by a thread in the multiple thread groups is used to lock or unlock a write lock.

17. A multi-thread concurrency management apparatus, comprising a processor and an interface circuit, wherein the interface circuit is configured to receive a signal from another communication apparatus and transmit the signal to the processor, or send a signal from the processor to another communication apparatus, and the processor is configured to implement the method according to any one of claims 1 to 8 by using a logic circuit or by executing code instructions.

18. A computer-readable storage medium, wherein the storage medium stores a computer program or instructions, and when the computer program or the instructions are executed by a communication apparatus, the method according to any one of claims 1 to 8 is implemented.

19. A computer program, wherein the computer program comprises instructions, and when the computer program is executed by a communication apparatus, the method according to any one of claims 1 to 8 is implemented.

20. A server, comprising a processor and a memory, wherein the memory is configured to store program code, and when the program code is executed by the processor, the server implements the method according to any one of claims 1 to 8.

21. A chip system, wherein the chip system comprises a processor configured to support a device to implement a function related to the method according to any one of claims 1 to 8.
